Europäisches Patentamt

European Patent Office

Office européen des brevets

(19)

(11) Numéro de publication: **0 286 561**
**B1**

(12) # FASCICULE DE BREVET EUROPEEN

(45) Date de publication du fascicule du brevet:
06.06.90

(51) Int. Cl.⁵: **F16L 33/04**

(21) Numéro de dépôt: **88470004.8**

(22) Date de dépôt: **17.03.88**

(54) **Collier à vis de serrage pivotante.**

(30) Priorité: **09.04.87 FR 8705017**

(43) Date de publication de la demande:
**12.10.88 Bulletin 88/41**

(45) Mention de la délivrance du brevet:
**06.06.90 Bulletin 90/23**

(84) Etats contractants désignés:
**AT BE CH DE ES GB GR IT LI SE**

(56) Documents cités:
**CH-A- 320 864**
**CH-A- 444 596**
**DE-U- 8 418 046**
**US-A- 1 187 430**
**US-A- 2 339 759**
**US-A- 2 837 383**

(73) Titulaire: **PONT-A-MOUSSON S.A., 91, Avenue de la Libération, F-54017 Nancy(FR)**

(72) Inventeur: **Bucher, Claude, 5, rue de L'Imagerie, F-54700 Pont-à-Mousson(FR)**
Inventeur: **Gaillot, Jean-Paul, 48, rue Emile Moselly, F-54000 Nancy(FR)**
Inventeur: **Lagabe, André, 20, rue de la Mairie Montauville, F-54700 Pont-à-Mousson(FR)**

(74) Mandataire: **Puit, Thierry et al, Centre de Recherches de Pont-à-Mousson Service de Propriété Industrielle Boîte Postale 109, F-54704 Pont-à-Mousson Cédex(FR)**

ACTORUM AG

## Description

La présente invention concerne un collier de serrage comportant un bracelet sensiblement annulaire et ouvert constitué en un matériau, notamment un métal, élastiquement déformable de manière qu'au repos le bracelet annulaire reste ent'ouvert, et des moyens de serrage associés audit bracelet pour permettre le rapprochement des extrémités de celui-ci et le serrage du bracelet, lesdits moyens de serrage comprenant, d'une part, une tige filetée qui est munie d'une tête élargie à son extrémité libre et qui coopère par vissage avec un organe de support de tige filetée supporté, sur une extrémité ou au voisinage d'une extrémité du bracelet ouvert, de manière à pouvoir pivoter autour d'un axe sensiblement parallèle à l'axe du bracelet, la tige s'étendant sensiblement transversalement à cet axe de pivotement, et, d'autre part, une pièce de retenue qui est supportée sur l'autre extrémité ou au voisinage de l'autre extrémité du bracelet ouvert et qui présente une encoche traversante disposée et dimensionnée de manière que la tige filetée puisse y être engagée et que la tête élargie de celle-ci soit en appui contre le surface de la pièce de retenue tournée à l'opposé de l'autre extrémité du bracelet ouvert, afin qu'une rotation de la tige filetée provoque un rapprochement ou un éloignement des deux extrémités du bracelet et donc respectivement le serrage ou le desserrage de celui-ci.

Voir par exemple de par le brevet US-A 2 893 097.

L'inconvénient des colliers de serrage connus de ce type réside dans le fait que, lorsque le collier n'est pas serré, la tige filetée n'est pas retenue et tombe par gravité hors de l'encoche dans certaines positions de montage du collier. L'utilisateur est alors contraint de maintenir la tige filetée au fond de son encoche de réception tant que le serrage n'est pas effectué, ce qui constitue une contrainte dont il serait souhaitable d'être affranchi.

L'invention a précisément pour objet de proposer un agencement perfectionné d'un tel collier de serrage dans lequel, même lorsque le collier n'est pas serré, la tige filetée ne risque pas d'échapper hors de son encoche de retenue quelle que soit la position de montage du collier.

A cet fins, un collier de serrage du type précité se caractérise, conformément à l'invention, en ce que l'extrémité de l'encoche destinée à coopérer avec la tête élargie de la tige filetée présente un élargissement qui possède une dimension transversale suffisante et qui est conformée pour recevoir tout ou partie de la tête élargie et dans lequel cette tête élargie reste engagée, une fois qu'elle y est introduite, sous l'action de l'élasticité du matériau constitutif du bracelet qui tend à écarter élastiquement l'une de l'autre les deux extrémités de celui-ci.

Avantageusement, la tête élargie de la tige filetée comporte, du côté de la tige filetée, une zone annulaire de retenue de diamètre supérieur à celui de la tige filetée et apte à s'engager dans l'élargissement précité de l'encoche et, à son extrémité libre, une zone de préhension, notamment hexagonale, pour un outil de serrage ayant au moins partiellement une dimension transversale supérieure au diamètre de l'évidement de l'encoche. Dans un mode de réalisation particulier, la zone de préhension de la tête élargie possède, au niveau de sa jonction avec la zone de retenue, une partie élargie en forme de disque apte à coopérer avec la surface de la pièce de retenue qui entoure le bord de l'élargissement de l'encoche.

Dans un exemple de réalisation simple, la pièce de retenue est supportée, sur l'autre extrémité ou au voisinage de l'extrémité du bracelet ouvert, de manière à pouvoir pivoter autour d'un axe sensiblement parallèle à l'axe du bracelet. Dans ce cas, de façon avantageuse, l'organe de support et la pièce de retenue sont réalisés sous forme de pièces cylindriques de révolution. On peut alors faire en sorte que le bracelet possède, à ses extrémités ou au voisinage de ses extrémités, des paliers aptes à recevoir à libre rotation les susdites pièces cylindriques de révolution, ces paliers étant pourvus de dégagement centraux agencés pour donner libre passage à la tige filetée. Pour simplifier la fabrication, chaque palier peut être constitué par une bande de matériau cintrée et rapportée sur le bracelet ouvert. De façon souhaitable, chaque palier présente, sur son bord tourné vers le bord du bracelet, au moins une saillie radiale tournée vers l'intérieur pour retenir la pièce cylindrique de révolution.

L'invention sera mieux comprise à la lecture de la description détaillée qui suit de certains modes de réalisation préférés donnés uniquement à titre d'exemples non limitatifs ; dans cette description, on se réfère au dessin annexé sur lequel :

- la fig. 1 est une vue de côté d'un collier de serrage agencé selon l'invention ;
- la fig. 2 est une vue partielle, en perspective, à échelle agrandie, d'une pièce composante du collier de la fig. 1 ; et
- la fig. 3 est une vue de côté d'une partie d'un autre mode de réalisation d'un collier conforme à l'invention.

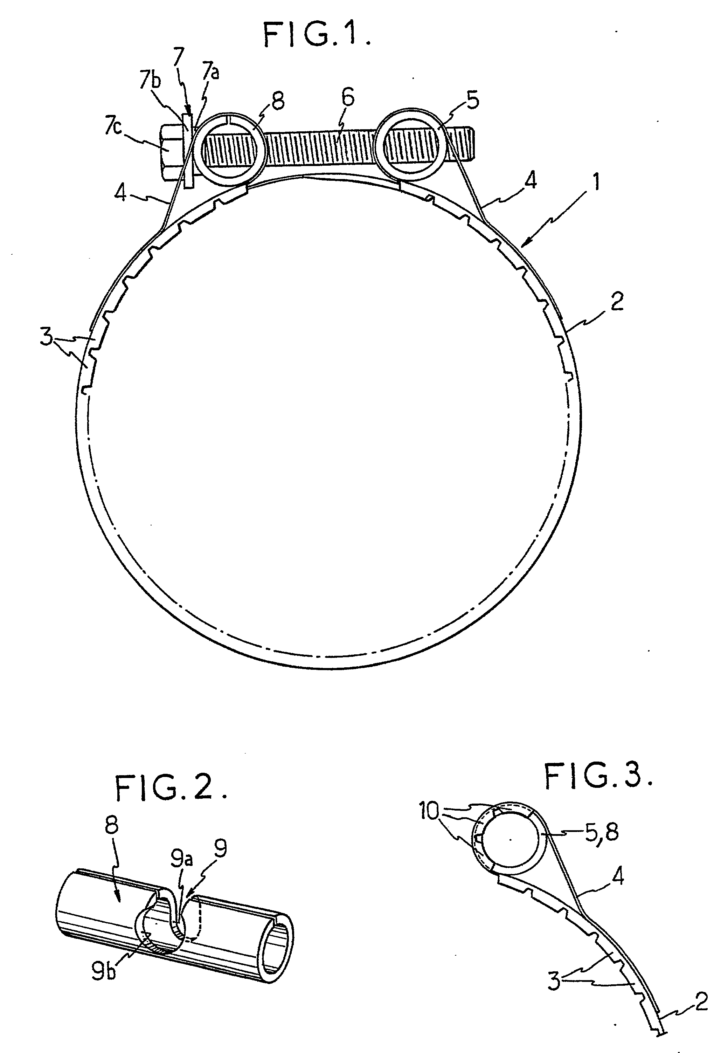

Le collier 1 montré à la fig. 1 comprend un bracelet ouvert 2 constitué par une bande métallique en forme d'anneau ouvert cylindrique de révolution.

Le bracelet 1 présente des rebords rabattus à 90° vers l'intérieur et présentant des découpes délimitant des languettes radiales 3 retenant un joint annulaire d'étanchéité en caoutchouc (non représenté).

Les extrémités du bracelet sont repliées sur elles-mêmes pour former deux boucles 4 constituant des paliers logeant des pièces cylindriques de révolution qui peuvent y pivoter librement. Les extrémités repliées du bracelet peuvent, bien entendu, être obtenues aussi à partir de pièces métalliques indépendantes, repliées en boucle et fixées par exemple par soudure sur les extrémités du bracelet.

L'une des pièces de révolution cylindrique est un organe de support 5 taraudé diamétralement dans sa zone centrale et supportant à vissage une tige filetée 6 dont l'extrémité libre est terminée par une tête 7 de diamètre supérieur à celle de la partie filetée.

L'autre pièce cylindrique de révolution constitue une pièce de retenu 8 (mieux visible sur la fig. 2) qui est creusée d'une encoche diamétrale 9 débouchant à ses deux extrémités et dont la profondeur est sensiblement supérieure au diamètre de la tige filetée 6.

Bien entendu, les deux boucles 4 formant paliers pour les pièces 5 et 8 sont évidées transversalement dans leurs régions centrales respectives pour laisser libre passage à la tige filetée 6 et à la tête 7 de celle-ci.

D'un côté de la pièce de retenue 8, l'encoche 9 présente une zone 9a ayant une largeur légèrement supérieure au diamètre de la tige filetée, tandis que de l'autre côté de la pièce de retenue l'encoche 9 présente une zone 9b ayant une largeur sensiblement supérieure au diamètre de la tige filetée et correspondant au diamètre de la tête élargie 7 ou d'une partie de la tête élargie 7. Dans l'exemple représenté, ce diamètre est celui d'une portion cylindrique de révolution 7a, dont le diamètre est supérieur à celui de la tige filetée 6, mais inférieur à celui d'une collerette 7b qui sépare la portion cylindrique 7a d'une tête hexagonale 7c.

Dans la position de montage représentée à la fig. 1, la tige filetée 6 est engagée dans la zone étroite 9a de l'encoche 9, tandis que la portion cylindrique 7a de la tête 7 est engagée dans la zone élargie 9b de l'encoche, la collerette 7b de la tête étant maintenue en appui contre la pièce de retenue 8 sous l'effet de l'élasticité de la bande métallique 2 qui tend à écarter l'une de l'autre les deux extrémités du bracelet. Grâce à cet agencement, la tête 7 de la tige filetée est retenue dans la gorge 9 quelle que soit la position du collier, et elle ne peut donc pas s'en échapper intempestivement sous l'action de la gravité au cours des manipulations de la mise en place du collier. Il suffit alors de tourner la tige filetée dans le sens du vissage pour rapprocher les deux extrémités du bracelet l'une de l'autre et serrer le collier.

Avantageusement, les pièces cylindriques 5 et 8 sont des manchons ou tronçons tubulaires cylindriques.

Egalement avantageusement, comme représenté à la fig. 3, les bords des boucles 4 sont rabattus à 90° et munis de découpes délimitant des languettes radiales 10 qui retiennent les pièces 5 et 8 et les empêchent d'échapper transversalement hors des boucles 4. Par rapport à la bande métallique 2, les languettes radiales 10 s'étendent donc à l'opposé des languettes radiales 3..

## Revendications

1. Collier de serrage (1) comportant un bracelet (2) sensiblement annulaire et ouvert constitué en un matériau, notamment un métal, élastiquement déformable de manière qu'au repos le bracelet annulaire reste entr'ouvert, et des moyens de serrage associés audit bracelet pour permettre le rapprochement des extrémités de celui-ci et le serrage du bracelet, lesdits moyens de serrage comprenant, d'une part, une tige filetée (6) qui est munie d'une tête élargie (7) à son extrémité libre et qui coopère par vissage avec un organe (5) de support de tige fileté supporté, sur une extrémité ou au voisinage d'une extrémité du bracelet ouvert, de manière à pouvoir pivoter autour d'un axe sensiblement parallèle à l'axe du bracelet, la tige s'étendant sensiblement transversalement à cet axe de pivotement, et, d'autre part, une pièce de retenue (8) qui est supportée sur l'autre extrémité ou au voisinage de l'autre extrémité du bracelet ouvert et qui présente une encoche traversante (9) disposée et dimensionnée de manière que la tige filetée (6) puisse y être engagée et que la tête élargie (7) de celle-ci soit en appui contre la surface de la pièce de retenue tournée à l'opposé de l'autre extrémité du bracelet ouvert, afin qu'une rotation de la tige filetée provoque un rapprochement ou un éloignement des deux extrémités du bracelet et donc respectivement le serrage ou le desserrage de celui-ci,
caractérisé en ce que l'extrémité de l'encoche destinée à coopérer avec la tête élargie de la tige filetée présente un élargissement (9b) qui possède une dimension transversale suffisante et qui est conformée pour recevoir tout ou partie de la tête élargie (7) et dans lequel cette tête élargie (7) reste engagée, une fois qu'elle y est introduite, sous l'action de l'élasticité du matériau constitutif du bracelet qui tend à écarter élastiquement l'une de l'autre les deux extrémités de celui-ci.

2. Collier de serrage selon la revendication 1, caractérisé en ce que le tête élargie (7) de la tige filetée (6) comporte, du côté de la tige filetée, une zone annulaire de retenue (7a) de diamètre supérieur à celui de la tige filetée (6) et apte à s'engager dans l'élargissement précité (9b) de l'encoche (9) et, à son extrémité libre, une zone de préhension (7c), notamment hexagonale, pour un outil de serrage ayant au moins partiellement une dimension transversale supérieure au diamètre de l'évidement (9b) de l'encoche (9).

3. Collier de serrage selon la revendication 2, caractérisé en ce que la zone de préhension (7c) de la tête élargie (7) possède, au niveau de sa jonction avec la zone de retenue (7a), une partie élargie en forme de disque (7b) apte à coopérer avec la surface de la pièce de retenue qui entoure le bord de l'élargissement de l'encoche.

4. Collier de serrage selon la revendication 1, caractérisé en ce que la pièce de retenue (8) est supportée, sur l'autre extrémité ou au voisinage de l'extrémité du bracelet ouvert, de manière à pouvoir pivoter autour d'un axe sensiblement parallèle à l'axe du bracelet.

5. Collier de serrage selon la revendication 4, caractérisé en ce que l'organe de support (5) et la pièce de retenue (8) sont réalisés sous forme de pièces cylindriques de révolution.

6. Collier de serrage selon la revendication 5, caractérisé en ce que le bracelet (2) possède, à ses extrémités ou au voisinage de ses extrémités, des paliers (4) aptes à recevoir à libre rotation les susdites pièces cylindriques de révolution, ces paliers étant pourvus de dégagements centraux agencés pour doner libre passage à tige filetée.

7. Collier de serrage selon la revendication 6, caractérisé en ce que chaque palier (4) est constitué par une bande de matériau cintrée et rapportée sur le bracelet ouvert.

8. Collier de serrage selon la revendication 6, caractérisé en ce que chaque palier (4) présente, sur son bord tourné vers le bord du bracelet, au moins une saillie radiale (10) tournée vers l'intérieur pour retenir la pièce cylindrique de révolution (5, 8).

**Patentansprüche**

1. Klemmschelle (1), die einen im wesentlichen ringförmigen und offenen Ring (2) aufweist, der aus einem Material, insbesondere einem Metall gebildet ist, das elastisch verformbar ist, derart, daß in Ruhestellung der ringförmige Ring leicht offen bleibt, und Klemmeinrichtungen, die dem Ring zugeordnet sind, um das Annähern seiner Enden und das Klemmen des Rings zu erlauben, wobei die Klemmeinrichtungen einerseits eine Gewindespindel (6), die mit einem vergrößerten Kopf (7) an ihrem freien Ende versehen ist und die durch Schrauben mit einem Stützorgan (5) der Gewindespindel zusammenwirkt, die an einem ihrer Enden oder in der Nähe eines ihrer Enden des offenen Rings gestützt ist, derart, um um eine im wesentlichen zur Achse des Rings parallele Achse schwenken zu können, wobei sich die Spindel im wesentlichen quer zu dieser Schwenkachse erstreckt, und andererseits ein Rückhalteteil (8) aufweist, das an seinem anderen Ende oder in der Nähe des anderen Endes des offenen Rings gestützt ist, und das eine Querausnehmung (9) aufweist, die derart angeordnet und dimensioniert ist, daß die Gewindespindel (6) hierin in Eingriff stehen kann und daß der vergrößerte Kopf (7) von dieser in Anlage gegen die Seite des Rückhalteteils steht, das gegenüber dem anderen Ende des offenen Rings gedreht ist, damit eine Drehung der Gewindespindel eine Annäherung oder eine Entfernung der beiden Enden des Rings und demzufolge entsprechend das Klemmen oder Lösen von diesem hervorruft, dadurch gekennzeichnet, daß das Ende der Ausnehmung, die dazu bestimmt ist, mit dem vergrößerten Kopf der Gewindespindel zusammenzuwirken, eine Vergrößerung (9b) aufweist, die eine aureichende Querabmessung aufweist, und die ausgebildet ist, um ganz oder teilweise den vergrößerten Kopf (7) aufzunehmen, und in der dieser vergrößerte Kopf (7) in Eingriff bleibt, wenn sie einmal hier eingeführt ist, unter der Wirkung der Elastizität des den Ring bildenden Materials, der dazu tendiert, elastisch das eine vom anderen seiner beiden Enden zu entfernen.

2. Klemmschelle nach Anspruch 1, dadurch gekennzeichnet, daß der vergrößerte Kopf (7) der Gewindespindel (6) auf der Seite der Gewindespindel eine ringförmige Rückhaltezone (7a) von größerem Durchmesser als jener der Gewindespindel (6) aufweist und geeignet ist, in Eingriff in die vorgenannte Vergrößerung (9b) der Ausnehmung (9) zu kommen, und an seinem freien Ende eine, insbesondere hexagonale Greifzone (7c), für ein Klemmwerkzeug aufweist, die wenigstens teilweise eine grössere Querabmessung bezüglich des Durchmessers der Ausnehmung (9b) der Kerbe bzw. Ausnehmung (9) aufweist.

3. Klemmschelle nach Anspruch 2, dadurch gekennzeichnet, daß die Greifzone (7c) des vergrößerten Kopfes (7) auf der Höhe ihrer Verbindung mit der Haltezone (7a) einen vergrößerten Bereich in Form einer Scheibe (7b) aufweist, der geeignet ist, mit der Oberfläche des Rückhalteteils zusammenzuwirken, die den Rand der Vergrößerung der Ausnehmung umgibt.

4. Klemmschelle nach Anspruch 1, dadurch gekennzeichnet, daß das Rückhalteteil (8) an dem anderen Ende oder in der Nähe des Endes des offenen Rings getragen wird, derart, daß es um eine im wesentlichen zur Achse des Rings parallele Achse drehen kann.

5. Klemmschelle nach Anspruch 4, dadurch gekennzeichnet, daß das Stützorgan (5) und das Rückhalteteil (8) aus zylindrischen Drehteilen gebildet sind.

6. Klemmschelle nach Anspruch 5, dadurch gekennzeichnet, daß der Ring (2) an seinen Enden oder in der Nähe seiner Enden Lager (4) aufweist, die geeignet sind zur freien Drehung die genannten zylindrischen Drehteile aufzunehmen, wobei die Lager mit zentralen Ausnehmungen versehen sind, die für einen freien Hindurchtritt der Gewindespindel ausgebildet sind.

7. Klemmschelle nach Anspruch 6, dadurch gekennzeichnet, daß jedes Lager (4) aus einem Band von bogenförmigem Material gebildet ist und auf den offenen Ring aufgebracht ist.

8. Klemmschelle nach Anspruch 6, dadurch gekennzeichnet, daß jedes Lager (4) an seinem Rand, der dem Rand des Rings zugedreht ist, wenigstens einen radialen Vorsprung (10) aufweist, der nach Innen gedreht ist, um das zylindrische Drehteil (5, 8) zu halten.

**Claims**

1. Tightening band (1) comprising a substantially annular and open bracelet (2) constituted by a material, in particular a metal, which is elastically deformable so that when it is not in use the annular bracelet remains partly open, and tightening means associated with said bracelet in order to allow the closing-up of the ends of the latter and the tightening of the bracelet, said tightening means comprising, on the one hand, a threaded rod (6) which is provided with an enlarged head (7) at its free end and which cooperates by screwing with a member (5) for supporting the threaded rod supported, at one end or in the vicinity of one end of the open bracelet, in order to be able to pivot about an axis substantially parallel to the axis of the bracelet, the rod extending substantially transversely to this pivot axis, and, on the other hand, a retaining member (8) which is supported on the other end or in the vicinity of the other end of the open bracelet and which comprises a through-notch (9) disposed and dimensioned so that the threaded rod (6) can be engaged therein and that the enlarged head (7) of the latter bears against the surface of the retaining member directed away from the other end of the open bracelet, in order that a rotation of the threaded rod causes closing-up or opening of the two ends of the bracelet and thus respectively tightening or loosening of the latter, characterised in that the end of the notch intended to co-operate with the enlarged head of the threaded rod has an enlargement (9b) which has a sufficient transverse dimension and which is shaped to receive all or part of the enlarged head (7) and in which this enlarged head (7) remains engaged, once it is introduced therein, under the action of the elasticity of the material constituting the bracelet, which tends to elastically separate the two ends of the latter one from the other.

2. Thightening band according to Claim 1, characterised in that the enlarged head (7) of the threaded rod (6) comprises, adjacent the threaded rod, an annular retaining region (7a) of diameter greater than that of the threaded rod (6) and able to engage in the aforesaid enlargement (9b) of the notch (9) and, at its free end, a gripping region (7c), which in particular is hexagonal, for a tightening tool having at least partly a transverse dimension greater than the diameter of the recess (9b) of the notch (9).

3. Tightening band according to Claim 2, characterised in that the gripping region (7c) of the enlarged head (7) comprises, in the vicinity of its junction with the retaining region (7a), an enlarged part in the shape of a disc (7b) able to co-operate with the surface of the retaining member which surrounds the edge of the enlargement of the notch.

4. Tightening band according to Claim 1, characterised in that the retaining member (8) is supported, on the other end or in the vicinity of the end of the open bracelet, in order to be able to pivot about an axis substantially parallel to the axis of the bracelet.

5. Tightening band according to Claim 4, characterised in that the support member (5) and the retaining member (8) are made in the form of parts which are cylinders of revolution.

6. Tightening band according to Claim 5, characterised in that the bracelet (2) comprises, at its ends or in the vicinity of its ends, bearings (4) able to receive the said parts which are cylinders of revolution, so that they are free to rotate, these bearings being provided with central openings arranged in order to give free passage to the threaded rod.

7. Tightening band according to Claim 6, characterised in that each bearing (4) is constituted by a strip of material which is bent and attached to the open bracelet.

8. Tightening band according to Claim 6, characterised in that each bearing (4) comprises, on its edge facing the edge of the bracelet, at least one radial projection (10) directed towards the inside in order to retain the part (5, 8) whichis a cylinder of revolution.

EP 0 286 561 B1

# FIG.1.

# FIG.2.

# FIG.3.